# EUROPEAN PATENT APPLICATION

(11) **EP 4 417 720 A1**
(43) Date of publication of application: **21.08.2024**
(21) Application number: 22889675.9
(22) Date of filing: 20.09.2022
(51) Int. Cl.: C22B 21/06, C22B 7/00, C22B 9/10

(54) **METHOD FOR REMOVING IMPURITIES, METHOD FOR PRODUCING ALUMINUM-BASED ALLOY, AND METHOD FOR PRODUCING ALUMINUM-BASED ALLOY MATERIAL**

(30) Priority: 04.11.2021 JP 2021180592; 22.07.2022 JP 2022116859
(71) Applicant: KABUSHIKI KAISHA KOBE SEIKO SHO (KOBE STEEL, LTD.), Hyogo 651-8585 (JP)
(72) Inventor: KOMORI, Kohei, Hyogo 651-2271 (JP); YAMAGUCHI, Katsuhiro, Hyogo 651-2271 (JP); MASADA, Kazuharu, Tochigi 321-4367 (JP)
(74) Representative: Müller-Boré & Partner Patentanwälte PartG mbB
(86) International application number: PCT/JP2022/035024
(87) International publication number: WO 2023/079851

(57) **Abstract**

An object of the present invention is to provide a method for removing impurities capable of efficiently removing impurities mixed in aluminum or an aluminum alloy, while reducing environmental load. The method for removing impurities according to an aspect of the present invention includes: a mixing step of mixing Mg or a Mg alloy into molten metal containing aluminum or an aluminum alloy and impurities, such that a Mg content in the molten metal is greater than or equal to 5% by mass and less than or equal to 18% by mass; a holding step of holding the molten metal after the mixing step in a range of greater than or equal to 530 °C and less than or equal to 700 °C; and a separating step of separating, from or in the molten metal, an intermetallic compound generated in the holding step.

## Description

### [TECHNICAL FIELD]

The present invention relates to a method for removing impurities, a method for producing an aluminum-based alloy, and a method for producing an aluminum-based alloy material.

### [BACKGROUND ART]

Aluminum is superior in recyclability, and many aluminum products formed of aluminum wrought materials, typified by aluminum cans and die-cast products, are remelted after disposal and recycled into new products. Although aluminum generates a large amount of carbon dioxide (CO₂) at a time of producing metal, the amount of metal used can be reduced by recycling aluminum products, whereby the reduction of carbon dioxide can be promoted.

Impurities are attached to aluminum products after disposal, and the concentration of impurity elements gradually increases with repeated recycling. Therefore, aluminum products are typically cascade-recycled into products with looser compositional standards.

On the other hand, with regard to aluminum products after disposal, it is desirable in some cases to remove impurities and then carry out horizontal recycling, or to remove some elements and recycle into products with different compositions.

Many technologies for removing impurities from aluminum or aluminum alloy molten metal have been reported, and for example, as a technology for removing Fe, the following technology has been proposed: molten metal containing Fe as an impurity is made to contain predetermined amounts of Mg, Zn, and Mn, and then, an Fe compound is crystallized from the molten metal (see Patent Document 1).

Furthermore, as a technology for reducing the impurity concentration in aluminum or aluminum alloy molten metal, a technology in which a three-layer electrolytic refining method or a segregation method is used in a process of producing aluminum metal has been disclosed (see Non-Patent Document 1).

### [PRIOR ART DOCUMENTS]

### [PATENT DOCUMENTS]

Patent Document 1: Japanese Unexamined Patent Application, Publication No. 2019-77895

### [NON-PATENT DOCUMENTS]

Non-Patent Document 1: Kondo et al., Materia Japan, 1994, Vol. 33, No. 1, 62-68

### [SUMMARY OF THE INVENTION]

### [PROBLEMS TO BE SOLVED BY THE INVENTION]

However, according to the technology disclosed in Patent Document 1, a relatively large amount of Mg needs to be added to the molten metal, which increases labor of diluting the molten metal after removing the impurities. Furthermore, in a case in which Mg metal is produced upon adding Mg, a large amount of carbon dioxide is discharged during the production of the metal. Moreover, in the technology disclosed in Patent Document 1, the added Mn is contained as an impurity in the molten metal, and therefore, it is difficult to say that impurities can be effectively removed.

Furthermore, according to the technology disclosed in Non-Patent Document 1, it is possible in principle to remove impurities, but the yield may be low as a method for refining scrap containing many impurity elements. Furthermore, the three-layer electrolytic refining method is unprofitable in regions in which electricity costs are high, and in the segregation method, the yield may decrease as the impurity concentration in a raw material increases.

As described above, the foregoing conventional technologies are not adequate as methods or the like for recycling aluminum scraps that are collected from the market and contain many impurities.

The present invention was made in view of the foregoing circumstances, and an object of the present invention is to provide a method for removing impurities capable of efficiently removing impurities mixed in aluminum or an aluminum alloy, while reducing environmental load.

### [MEANS FOR SOLVING THE PROBLEMS]

A method for removing impurities according to one aspect of the present invention includes: a mixing step of mixing Mg or a Mg alloy into molten metal containing aluminum or an aluminum alloy and impurities, such that a Mg content in the molten metal is greater than or equal to 5% by mass and less than or equal to 18% by mass; a holding step of holding the molten metal after the mixing step in a range of greater than or equal to 530 °C and less than or equal to 700 °C; and a separating step of separating, from or in the molten metal, an intermetallic compound generated in the holding step.

### [EFFECTS OF THE INVENTION]

The method for removing impurities according to the one aspect of the present invention enables efficiently removing impurities mixed in aluminum or an aluminum alloy, while reducing environmental load.

### [BRIEF DESCRIPTION OF THE DRAWINGS]

FIG. 1 is a flowchart illustrating a method for removing impurities according to an embodiment of the present invention.
FIG. 2 is a flowchart illustrating a method for producing an aluminum-based alloy according to an embodiment of the present invention.
FIG. 3 is a flowchart illustrating a method for producing an aluminum-based alloy according to an embodiment different from that of the method for producing an aluminum-based alloy in FIG. 2.
FIG. 4 is a flowchart illustrating a method for producing an aluminum-based alloy material according to an embodiment of the present invention.

### [DESCRIPTION OF EMBODIMENTS]

### Description of Embodiments of the Present Invention

Firstly, embodiments of the present invention are listed and described.

The method for removing impurities according to the one aspect of the present invention includes: a mixing step of mixing Mg or a Mg alloy into molten metal containing aluminum or an aluminum alloy and impurities, such that a Mg content in the molten metal is greater than or equal to 5% by mass and less than or equal to 18% by mass; a holding step of holding the molten metal after the mixing step in a range of greater than or equal to 530 °C and less than or equal to 700 °C; and a separating step of separating, from or in the molten metal, an intermetallic compound generated in the holding step.

In the method for removing impurities, by controlling the Mg content in the molten metal in the mixing step to fall within the above range, a liquidus-line temperature of the molten metal can be appropriately lowered, and thus, by holding the molten metal at temperatures within the above range in the holding step, the intermetallic compound containing the impurities can be generated in the molten metal containing aluminum and Mg (Al-Mg-based molten metal). According to the method for removing impurities, a production amount of aluminum metal can be reduced by recycling aluminum, and in addition, a production amount of Mg metal can be reduced by minimizing the Mg content in the molten metal within the above range; accordingly, the amount of carbon dioxide generated due to the production of these metals can be reduced. As a result, the method for removing impurities enables reducing the environmental load.

Holding time of the molten metal in the holding step is preferably greater than or equal to 3 min. By thus setting the holding time of the molten metal in the holding step to be greater than or equal to the lower limit, the impurities can be easily and surely removed.

The impurities are preferably at least one type selected from the group consisting of Cr, Ti, V, and Zr. When the impurities are thus at least one type selected from the group consisting of Cr, Ti, V, and Zr, the impurities can be easily removed from the molten metal, while minimizing an amount of the Mg added in the mixing step.

In a method for producing an aluminum-based alloy according to an other aspect of the present invention, the method for removing impurities is used, and the method for producing an aluminum-based alloy includes a casting step of casting the molten metal after the intermetallic compound is separated by the separating step.

Since the method for removing impurities is used in the method for producing an aluminum-based alloy, aluminum can be recycled.

The method for producing an aluminum-based alloy preferably further includes, before the casting step, a component-adjusting step of adjusting a component of the molten metal after the intermetallic compound is separated by the separating step. By thus including, before the casting step, the component-adjusting step of adjusting the component of the molten metal after the intermetallic compound is separated by the separating step, aluminum can be recycled more easily.

In a method for producing an aluminum-based alloy material according to still another aspect of the present invention, the method for producing an aluminum-based alloy is used, and the method for producing an aluminum-based alloy material includes a plastic working step of subjecting an aluminum-based alloy obtained through the casting step, to plastic working.

Since the method for removing impurities is used in the method for producing an aluminum-based alloy material, aluminum can be recycled.

The method for producing an aluminum-based alloy material preferably further includes a component-adjusting step of adjusting a component of the molten metal after the intermetallic compound is separated by the separating step. By thus including the component-adjusting step of adjusting the component of the molten metal after the intermetallic compound is separated by the separating step, aluminum can be recycled more easily.

Hereinafter, the embodiments of the present invention are described in detail with reference to the drawings. It is to be noted that with regard to numerical values in this specification, it is possible to adopt only one of the upper limit value and the lower limit value disclosed herein, or to use any combination of the upper limit value and the lower limit value.

### Method for Removing Impurities

By the method for removing impurities, impurities which are difficult to remove when mixed in aluminum or an aluminum alloy are removed from Al-Mg-based molten metal. In the method for removing impurities, the molten metal is made to contain Mg, which is an essential element of the JIS-A5000 series, the molten metal is held in the range of greater than or equal to 530 °C and less than or equal to 700 °C to promote co-crystallization of the impurities, and the intermetallic compound generated is separated from the molten metal to remove the impurities. The method for removing impurities does not require purposely mixing unnecessary impurities to generate the intermetallic compound, and enables improving the yield. By using the method for removing impurities, for example, the impurity concentration can be reduced to be less than or equal to an allowable value of the JIS-A5000 series, while minimizing the Mg concentration in the molten metal.

To achieve the horizontal recycling from an aluminum wrought material to a wrought material, it is required to enable reducing the impurity concentration to be less than or equal to an allowable concentration in the wrought material. In light of this, according to the method for removing impurities, the concentration of impurities which are mixed in aluminum or an aluminum alloy and are difficult to remove can be reduced to be, for example, less than or equal to 0.2% by mass.

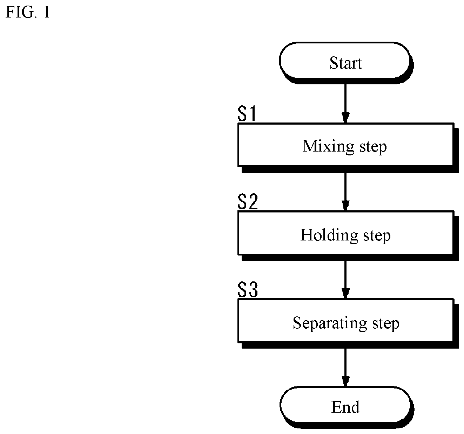

As illustrated in FIG. 1, the method for removing impurities includes: a mixing step S 1 of mixing Mg or a Mg alloy into molten metal containing aluminum or an aluminum alloy and impurities, such that the Mg content in the molten metal is greater than or equal to 5% by mass and less than or equal to 18% by mass; a holding step S2 of holding the molten metal after the mixing step S1 in a range of greater than or equal to 530 °C and less than or equal to700 °C; and a separating step S3 of separating, from or in the molten metal, an intermetallic compound generated in the holding step S2. It is to be noted that in the method for removing impurities, in light of preventing oxidation of the Mg and the like, the molten metal may be held in an inert atmosphere. Furthermore, in light of preventing oxidation of the Mg and the like, a slight amount (for example, approximately 30 ppm by mass) of Be (beryllium) may be added to the molten metal, and a flux may be dispersed.

### Impurities

The impurities to be removed by the method for removing impurities are not particularly limited, and examples thereof include transition metal elements. Transition metal elements serving as impurities may be attached to an aluminum product, and the impurity concentration is likely to increase with repeated recycling. Furthermore, with the expansion of applications, the use of aluminum products to which transition metal elements are added to impart strength, stiffness, heat resistance, etc. is considered. On the other hand, in general, it is difficult to remove transition metal elements by refining.

The present inventors have mainly studied a method for removing such transition metal elements, and searched for an element that can be efficiently removed from molten metal while minimizing the Mg content in the molten metal. As a result, the present inventors have found that, of the above transition metal elements, at least one type selected from the group consisting of Cr (chromium), Ti (titanium), V (vanadium), and Zr (zirconium) is suitable for the impurities.

As elements added to an aluminum alloy or as elements contained in a crystal grain refining material, metal, and the like, Cr, Ti, V and Zr are easily mixed thereinto. Stable compounds generated by bonding these elements to aluminum have crystallization temperatures higher than the liquidus-line temperature of aluminum, and thus, these elements can be easily removed from a liquid phase; in addition, the activity is increased by mixing the Mg into the molten metal, whereby the compounds can be generated at higher temperatures. That is to say, Cr, Ti, V, and Zr have higher compound generation temperatures than Fe and Mn, and the liquidus-line temperature of aluminum is decreased by mixing the Mg into the molten metal, whereas the compound generation temperatures of Cr, Ti, V, and Zr are increased. Therefore, in the method for removing impurities, when the impurities are at least one type selected from the group consisting of Cr, Ti, V, and Zr, the intermetallic compound can be easily generated in the holding step S2, while minimizing the amount of the Mg added in the mixing step S1; accordingly, the impurities can be easily removed from the molten metal.

### Mixing Step

In mixing step S1, for example, the Mg or the Mg alloy is mixed into molten metal obtained by dissolving aluminum scrap containing the impurities.

In the mixing step S1, the molten metal containing aluminum or an aluminum alloy and the impurities is made to contain the Mg, which is an essential element of aluminum alloys and the like of the JIS-A5000 series. When the molten metal contains the Mg, the generation of the intermetallic compound containing the impurities in the Al-Mg-based molten metal is promoted. The method for removing impurities does not require purposely excessively dissolving unnecessary impurities in the molten metal to generate the intermetallic compound. Furthermore, since the Mg is not an impurity, the method for removing impurities does not require providing a step for removing the Mg. Therefore, for example, the method for removing impurities allows the molten metal after removing the impurities to be diluted as needed and subjected to aluminum recycling. It is to be noted that a procedure for diluting the molten metal after removing the impurities (diluting step) is described later. Examples of the Mg alloy mixed in the mixing step S1 include JIS-MC5, JIS-MDC2A, and the like.

Examples of an effect of mixing the Mg or the Mg alloy in the mixing step S1 include the following effects (a) and (b).
(a) A decrease in the liquidus-line temperature enables holding the molten metal at low temperatures, thereby promoting the generation of the intermetallic compound.
(b) The Mg allows an increase in the activity of the impurity elements, thereby promoting the generation of the intermetallic compound.

Owing to one or both of the effects (a) and (b), the method for removing impurities enables forming the impurities into the intermetallic compound in the molten metal.

As described above, in the mixing step S1, the Mg or the Mg alloy is mixed such that the Mg content in the molten metal is greater than or equal to 5% by mass and less than or equal to 18% by mass. The lower limit of the Mg content in the molten metal after the mixing step S1 is preferably 7.5% by mass. On the other hand, the upper limit of the content is preferably 15% by mass, and more preferably 12% by mass. Furthermore, the upper limit of the content is still more preferably less than 11% by mass. When the content is less than the lower limit, it is possible that the liquidus-line temperature of the molten metal cannot be sufficiently reduced. Conversely, when the content is greater than the upper limit, the Mg concentration in molten metal after the impurities are removed by the separating step S3 increases, which may lead to an increase in costs for diluting the Mg or an increase in the environmental load.

### Holding Step

In the holding step S2, the intermetallic compound is generated in the molten metal which is cooled after the mixing step S1.

The lower limit of a holding temperature of the molten metal in the holding step S2 is 530 °C as mentioned above, preferably 550 °C, and more preferably 575 °C. On the other hand, the upper limit of the holding temperature is 700 °C as mentioned above, preferably 650 °C, more preferably 640 °C, and still more preferably 625 °C. To efficiently generate the intermetallic compound from the molten metal, it is desirable to hold the molten metal to in a low-temperature liquid phase in the holding step S2. When the holding temperature is greater than the upper limit, the generation efficiency of the intermetallic compound may be insufficient. Conversely, when the holding temperature is less than the lower limit, aluminum in the molten metal may be solidified, or the generation speed of the intermetallic compound may be lowered.

The lower limit of the holding time of the molten metal in the holding step S2 is preferably 3 min, more preferably 5 min, and still more preferably 10 min. When the holding time is less than the lower limit, it may be difficult to sufficiently generate the intermetallic compound. On the other hand, the upper limit of the holding time is preferably 180 min, more preferably 120 min, and still more preferably 60 min. In the method for removing impurities, by setting the holding time to be less than or equal to the upper limit, an excess of fuel cost for the temperature control of the molten metal can be inhibited. Furthermore, in the method for removing impurities, even when the holding time is less than or equal to the upper limit, the intermetallic compound can be sufficiently generated. Therefore, by subjecting the molten metal after the intermetallic compound is separated by the separating step S3 described later to aluminum recycling, a discharge amount of carbon dioxide can be reduced.

### Separating Step

In the separating step S3, for example, the intermetallic compound generated in the holding step S2 is separated from the molten metal. In the separating step S3, by separating the intermetallic compound from the molten metal after the holding step S2, the impurities are removed from the molten metal. A procedure for separating the intermetallic compound in the separating step S3 may be selected in accordance with an existence form and the like of the intermetallic compound. For example, in a case in which the intermetallic compound is in a form of microparticles of approximately several tens of micrometers, a method in which the intermetallic compound is attached to a flux, a method in which the intermetallic compound is filtrated through a refractory filter, a method in which the intermetallic compound is precipitated in the molten metal and only a supernatant is collected, or the like may be used.

Furthermore, in the separating step S3, the intermetallic compound generated in the holding step S2 may be separated in the molten metal. A procedure for separating the intermetallic compound in the molten metal is exemplified by a method in which the intermetallic compound is precipitated in the molten metal and then the molten metal is solidified. It is to be noted that after the molten metal is solidified, the impurities can be removed by cutting a part in which the intermetallic compound aggregates.

### Diluting Step

The molten metal (Al-Mg alloy molten metal) after the intermetallic compound is removed by the separating step can be used as an Al-Mg intermediate alloy with respect to aluminum molten metal having a low impurity concentration.

Furthermore, in the diluting step, it is also possible to evaporate the Mg with high vapor pressure by holding the molten metal in vacuum, thereby reducing the Mg concentration in the molten metal. Moreover, it is also possible to obtain Al-Mg-based molten metal having a low Mg concentration by using a flux for removing the Mg.

It is to be noted that the method for recycling aluminum including the diluting step in addition to the mixing step S 1, the holding step S2, and the separating step S3 described above is an embodiment of the present invention.

### Advantages

In the method for removing impurities, by controlling the Mg content in the molten metal in the mixing step S 1 to fall within the above range, the liquidus-line temperature of the molten metal can be appropriately lowered, and thus, by holding the molten metal at temperatures within the above range in the holding step S2, the intermetallic compound containing the impurities can be generated in the molten metal containing aluminum and Mg (Al-Mg-based molten metal). According to the method for removing impurities, the production amount of aluminum metal can be reduced by recycling aluminum, and in addition, the production amount of Mg metal can be reduced by minimizing the Mg content in the molten metal within the above range; accordingly, the amount of carbon dioxide generated due to the production of these metals can be reduced. As a result, the method for removing impurities enables reducing the environmental load.

In the method for removing impurities, the molten metal is made to contain the Mg, which is an essential element of aluminum alloys and the like typified by the JIS-A5000 series, to promote the generation of the compound of the impurity elements, and the intermetallic compound generated is separated from the molten metal to remove the impurity elements. In the method for removing impurities, impurity elements which are conventionally difficult to remove are efficiently removed by coexistence with the Mg, whereby the concentration of the impurity elements can be reduced to a concentration at which blending into an aluminum plate is possible. At this time, by minimizing the Mg content in the molten metal, the amount of metal used for producing the aluminum plate can be reduced. Therefore, according to the method for removing impurities, hard-to-recycle scrap can be used instead of aluminum metal, and furthermore, the discharge amount of carbon dioxide can be reduced.

### Method for Producing Aluminum-Based Alloy

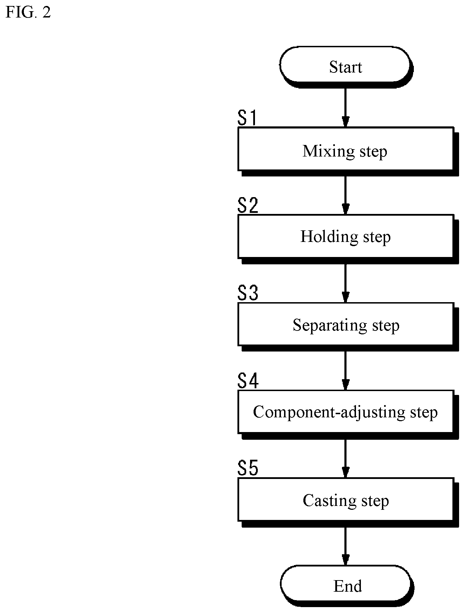

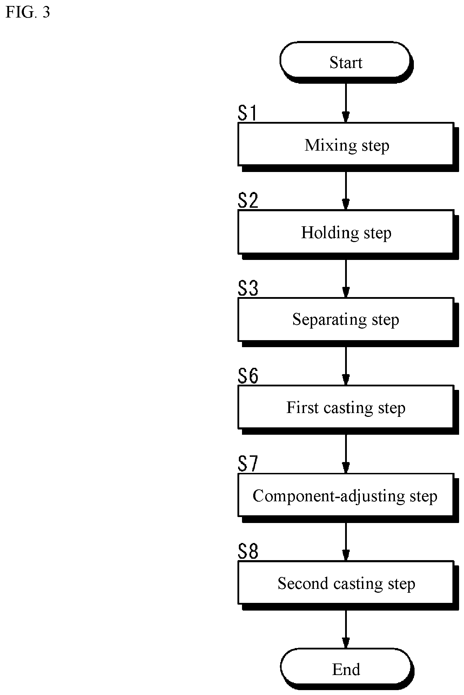

Next, referring to FIGs. 2 and 3, the method for producing an aluminum-based alloy using the method for removing impurities is described. In the method for producing an aluminum-based alloy, for example, an Al-Mg-based alloy is produced. The method for producing an aluminum-based alloy includes a casting step of casting the molten metal after the intermetallic compound is separated by the separating step S3. Furthermore, the method for producing an aluminum-based alloy includes, before the casting step, a component-adjusting step of adjusting a component of the molten metal after the intermetallic compound is separated by the separating step.

In the method for producing an aluminum-based alloy, the casting step may be performed only once or a plurality of times after the separating step S3. Furthermore, in the case in which the casting step is performed a plurality of times, the component-adjusting step may be performed before any casting step. Moreover, the component-adjusting step may be performed a plurality of times. For example, in FIG. 2, a component-adjusting step S4 and a casting step S5 are each performed once in this order after the separating step S3. Furthermore, in FIG. 3, a casting step (first casting step S6), a component-adjusting step S7, and a casting step (second casting step S8) are performed in this order after the separating step S3. However, the number of times and the order of the casting step and the component-adjusting step are not limited to those in FIGs. 2 and 3. Hereinafter, each of the component-adjusting step and the casting step is described in detail.

### Component-Adjusting Step

In the component-adjusting step, the component of the molten metal from which the impurities have been removed through the separating step S3 is adjusted. In the component-adjusting step, aluminum metal, an alloy element, and the like are added to the molten metal. By adding the aluminum metal and the alloy element in the component-adjusting step, an aluminum alloy material of the JIS-A5000 series can be easily produced by the method for producing an aluminum-based alloy material described later. Furthermore, in the component-adjusting step, it is also possible to adjust the component of the molten metal by diluting the molten metal. Moreover, in the case in which the component-adjusting step is performed a plurality of times, a component to be added may be changed each time.

### Casting Step

In the casting step, the molten metal from which the impurities have been removed through the separating step S3 is casted. In the method for producing an aluminum-based alloy, the molten metal after the above-described separating step S3 contains the Mg, and the impurities have been removed from the molten metal. Therefore, the casting step is suitable for casting an Al-Mg-based alloy.

### Advantages

Since the method for removing impurities is used in the method for producing an aluminum-based alloy, aluminum can be recycled. Furthermore, since the method for producing an aluminum-based alloy includes the component-adjusting step, aluminum can be recycled more easily.

### Method for Producing Aluminum-Based Alloy Material

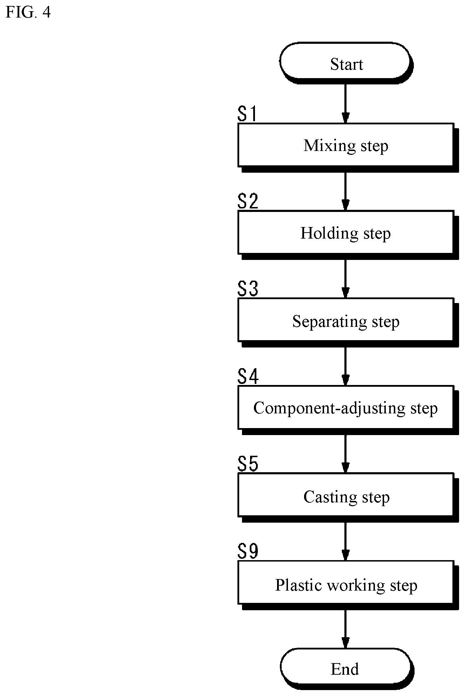

The method for producing an aluminum-based alloy material is carried out using the above-described method for producing an aluminum-based alloy. As illustrated in FIG. 4, the method for producing an aluminum-based alloy material includes a plastic working step S9 of subjecting the aluminum-based alloy obtained through the casting step S5, to plastic working. It is to be noted that FIG. 4 shows, as an example, a method for producing an aluminum-based alloy material using the method for producing an aluminum-based alloy in FIG. 2. However, the method for producing an aluminum-based alloy material may be carried out using the method for producing an aluminum-based alloy in FIG. 3, or may be carried out using a method for producing an aluminum-based alloy which does not include the above-described component-adjusting step.

The method for producing an aluminum-based alloy material may include a component-adjusting step of adjusting the component of the molten metal after the intermetallic compound is separated by the separating step S3. In the case in which the method for producing an aluminum-based alloy material includes the component-adjusting step, the method for producing an aluminum-based alloy material may be carried out in such a manner that another casting step is performed after the component-adjusting step, and the plastic working step is performed on the aluminum-based alloy obtained by the casting step. The component-adjusting step may be performed by a procedure similar to that of the component-adjusting step in the above-described method for producing an aluminum-based alloy. When the method for producing an aluminum-based alloy material includes the component-adjusting step, the composition of the aluminum-based alloy material to be obtained can be easily controlled. As a result, aluminum can be recycled more easily.

### Plastic Working Step

In the plastic working step, an aluminum-based alloy material is produced by subjecting the aluminum-based alloy to plastic working. The plastic working is exemplified by hot working and cold working. Furthermore, specific examples of processing means include rolling, extrusion, and forging. In the plastic working step, the aluminum-based alloy may be subjected to heat treatment as necessary. Examples of the heat treatment include homogenization heat treatment, solution heat treatment, and aging treatment.

In the plastic working step, for example, an Al-Mg-based alloy material is produced. In particular, in the plastic working step, an aluminum alloy material of the JIS-A5000 series is preferably produced. In other words, the method for producing an aluminum-based alloy material is suitably used as a method for producing an aluminum alloy material of the JIS-A5000 series. In the method for producing an aluminum-based alloy material, the molten metal after the above-described separating step S3 contains the Mg, which is an essential element of the JIS-A5000 series, and furthermore, the impurities have been removed from the molten metal. Therefore, the method for producing an aluminum-based alloy material can be easily used as a method for producing an aluminum alloy material of the JIS-A5000 series.

### Advantages

Since the method for removing impurities is used in the method for producing an aluminum-based alloy material, aluminum can be recycled.

### Other Embodiments

The above-described embodiments do not limit the configuration of the present invention. Therefore, in the above-described embodiments, the components of each part of the above-described embodiments can be omitted, replaced, or added based on the description in the present specification and general technical knowledge, and such omission, replacement, or addition should be construed as falling within the scope of the present invention.

For example, in the method for removing impurities, the molten metal may be stirred at a time of generating the intermetallic compound in the holding step S2. However, in the method for removing impurities, the intermetallic compound can be easily generated without stirring the molten metal.

The method for producing an aluminum-based alloy is not limited to the configuration including the component-adjusting step. For example, in the case in which the method for producing an aluminum-based alloy does not include the component-adjusting step, it is also possible to use, as an intermediate alloy, the aluminum-based alloy obtained by the method for producing an aluminum-based alloy and to subject the intermediate alloy separately to the component adjustment.

### EXAMPLES

Hereinafter, the present invention is described in detail by way of Examples; the present invention should not be construed as being limited to description in the Examples.

### No. 1 to No. 6

Molten metal was prepared in such a manner that A5052, Al-5% Cr, Al-5% Ti, Al-5% V, Al-5% Zr, pure Mg, and pure Al were dissolved in a graphite crucible such that Mg and an impurity element shown in Table 1 were contained at the contents in Table 1. Subsequently, the molten metal was cooled to the holding temperature in Table 1 and was then allowed to stand still for the holding time in Table 1. After that, a furnace was powered off to solidify the molten metal, a part was picked out from an upper part of an ingot obtained, and the impurity concentration was measured by ICP optical emission spectroscopy. The measurement results are shown in Table 1. It is to be noted that it can be considered that a compound containing the impurity element is precipitated in the lower part of the ingot; therefore, it is considered that the measurement results in Table 1 mean the content of the impurities in an Al-Mg alloy part.

### No. 7 and No. 8

Molten metal was prepared in such a manner that A5052 and pure Mg were dissolved in a Si-C crucible such that Mg and impurity elements shown in Table 1 were contained at the contents in Table 1. Subsequently, the molten metal was cooled to the holding temperature in Table 1 and was then allowed to stand for the holding time in Table 1. After that, the crucible was tilted to pour only a supernatant such that the proportion of the remaining molten metal was greater than or equal to 10% by mass and less than or equal to 20% by mass of the dissolved amount, the supernatant was solidified after the pouring, and the impurity concentration was measured by solid-state emission spectroscopy. The measurement results are shown in Table 1.

**Table 1**

| | Molten Metal | | | | | Measurement Results |
|---|---|---|---|---|---|---|
| | impurity element | | Mg | holding temperature [°C] | holding time [min] | impurity concentration [% by mass] |
| | component | content [% by mass] | content [% by mass] | | | |
| No. 1 | Ti | 1 | 10 | 619 | 10 | 0.15 |
| No. 2 | V | 1 | 10 | 620 | 10 | 0.07 |
| No. 3 | Zr | 1 | 10 | 620 | 10 | 0.17 |
| No. 4 | Cr | 0.25 | 7.5 | 635 | 10 | 0.17 |
| No. 5 | Cr | 0.25 | 10 | 623 | 10 | 0.12 |
| No. 6 | Cr | 0.25 | 15 | 590 | 10 | 0.03 |
| No. 7 | Cr | 0.21 | 10 | 623 | 15 | 0.11 |
| | Ti | 0.033 | | | | 0.016 |
| No. 8 | Cr | 0.21 | 10 | 623 | 15 | 0.11 |
| | Ti | 0.033 | | | | 0.017 |

As shown in Table 1, it is found that Cr, Ti, V, and Zr serving as impurities can be removed by setting the Mg content in the molten metal to be greater than or equal to 5% by mass and less than or equal to 18% by mass and holding the molten metal at temperatures of greater than or equal to 530 °C and less than or equal to 700 °C.

### [INDUSTRIAL APPLICABILITY]

As described above, the method for removing impurities according to the one aspect of the present invention is suitable for removing impurities mixed in aluminum or an aluminum alloy.

## Claims

1. A method for removing impurities, the method comprising:
mixing Mg or a Mg alloy into molten metal comprising aluminum or an aluminum alloy and impurities, such that a Mg content in the molten metal is greater than or equal to 5% by mass and less than or equal to 18% by mass;
holding the molten metal after the mixing in a range of greater than or equal to 530 °C and less than or equal to 700 °C; and
separating, from or in the molten metal, an intermetallic compound generated in the holding.

2. The method for removing impurities according to claim 1, wherein holding time of the molten metal in the holding is greater than or equal to 3 min.

3. The method for removing impurities according to claim 1 or 2, wherein the impurities are at least one type selected from the group consisting of Cr, Ti, V, and Zr.

4. A method for producing an aluminum-based alloy, wherein the method for removing impurities according to claim 1 or 2 is used,
the method for producing an aluminum-based alloy comprising:
casting the molten metal after the intermetallic compound is separated by the separating.

5. The method for producing an aluminum-based alloy according to claim 4, further comprising:
before the casting, adjusting a component of the molten metal after the intermetallic compound is separated by the separating.

6. A method for producing an aluminum-based alloy material, wherein the method for producing an aluminum-based alloy according to claim 4 is used,
the method for producing an aluminum-based alloy material comprising:
subjecting an aluminum-based alloy obtained through the casting, to plastic working.

7. The method for producing an aluminum-based alloy material according to claim 6, further comprising:
adjusting a component of the molten metal after the intermetallic compound is separated by the separating.
